# EUROPÄISCHE PATENTSCHRIFT

(11) **EP 1 302 341 B1**
(45) Veröffentlichungstag und Bekanntmachung des Hinweises auf die Patenterteilung: **08.11.2006**
(21) Anmeldenummer: 02020103.4
(22) Anmeldetag: 07.09.2002
(51) Int. Cl.: B60D 1/02, B60D 1/06, B60D 1/28

(54) **Anhängerkupplung**
Trailer coupling
Attelage de remorque

(30) Priorität: 05.08.2002 DE 20212056 U
(43) Veröffentlichungstag der Anmeldung: 16.04.2003
(73) Patentinhaber: GKN Walterscheid Cramer GmbH, 53797 Lohmar (DE)
(72) Erfinder: Afflerbach, Henning F., 44227 Dortmund (DE); Gottschling, Reinhard, 45289 Essen (DE); Steiner, Peter, 45721 Haltern (DE); Staude, Rudolf, 42111 Wuppertal (DE)
(74) Vertreter: Nunnenkamp, Jörg

(56) Entgegenhaltungen:
- US-A- 2 697 618
- US-A- 3 479 057
- US-A- 3 759 548
- US-A- 3 779 653
- US-A- 4 394 031
- US-A- 4 552 377

## Beschreibung

Die Erfindung betrifft eine Anhängerkupplung für Zugfahrzeuge, mit einem am Zugfahrzeug befindlichen Kupplungselement, und mit einem am Anhänger angeordneten Gegenkupplungselement, wobei das Gegenkupplungselement mittels eines Niederhalters gegenüber dem Kupplungselement verriegelt wird, wobei ferner der Niederhalter von seiner Offenstellung in seine Schließstellung und umgekehrt durch seitliches Verschwenken überführt wird und wobei der Niederhalter mittels eines Mitnehmers in Offen- und Schließstellung gehalten wird und durch Lösen des Mitnehmers mit Hilfe einer Auslösevorrichtung verschwenkbar ist.

Eine Anhängerkupplung der eingangs beschriebenen Ausführungsform wird in der US-PS 3 759 548 vorgestellt. Hier formen der Mitnehmer und die Auslösevorrichtung gleichsam eine Einheit in Gestalt einer Flügelmutter, welche ihrerseits den Niederhalter beaufschlagt. Zwar lässt sich der Niederhalter seitlich verschwenken. Allerdings kann nicht sichergestellt werden, dass sich die Flügelmutter unbeabsichtigt löst und folglich den Niederhalter frei gibt. Im Übrigen ist die Bedienung aufwändig, weil der Mitnehmer inklusive Auslösevorrichtung jeweils schraubend beaufschlagt werden muss, was entsprechend viel Zeit und Mühe kostet.

Eine andere Anhängerkupplung wird beispielhaft in der US-PS 4 394 031 oder auch der US-PS 4 552 377 vorgestellt. Bei den vorbekannten Kupplungen besteht ein Problem darin, dass die Bedienung dadurch erschwert wird, dass der Niederhalter automatisch von seiner Offenstellung in die Schließstellung per Federkraft überführt wird. Verletzungen können hieraus resultieren.

Darüber hinaus kennt man Anhängerkupplungen, wie sie beispielhaft in der DE 200 05 229 U1 bzw. der AT 012093 beschrieben werden. Vergleichbare Anhängerkupplungen sind aus der Praxis bekannt.

Bei solchen Anhängerkupplungen sorgt der um eine horizontale Achse zumeist vertikal verschwenkbare Niederhalter dafür, dass beispielsweise die auf eine Kupplungskugel aufgesetzte Kugelpfanne in dieser Kupplungsstellung verriegelt wird. Dazu lässt sich der Niederhalter mit Hilfe einer Stecksicherung in dieser Verriegelungsstetlung sichern (vgl. AT 012093). Das ist mit relativ viel Spiel verbunden, welches sich zudem belastungs- und/oder altersabhängig vergrößern. Daraus können im schlimmsten Fall unbeabsichtigte Abkupplungen des Anhängers oder doch zumindest Schlaggeräusche bzw. generell unerwünschte Anhängerbewegungen resultieren. Hier will die Erfindung insgesamt Abhilfe schaffen.

Der Erfindung liegt das technische Problem zu Grunde, eine derartige Anhängerkupplung so weiter zu entwickeln, dass der Niederhalter mit möglichst geringem Spiel für eine zuverlässige Verriegelung zwischen Kupplungselement und Gegenkupplungselement sorgt, und zwar bei einwandfreier und einfacher Bedienbarkeit sowie gesteigerter Sicherheit.

Zur Lösung dieser technischen Problemstellung ist eine gattungsgemäße Anhängerkupplung für Zugfahrzeuge im Rahmen der Erfindung dadurch gekennzeichnet, dass die Auslösevorrichtung von einer Feder beaufschlagt wird, deren Federkraft zu ihrer Betätigung überwunden werden muss, und dass der in der Auslösevorrichtung getragene Mitnehmer in Offen- und Schließstellung des Niederhalters in eine Verriegelungsausnehmung am Niederhalter eingreift.

Die vorbeschriebenen Schwenkbewegungen des Niederhalters erfolgen im Wesentlichen in einer zumeist horizontalen Zugebene. Diese Ebene bzw. Zugebene entspricht größtenteils der Ebene, in welcher die vom Zugfahrzeug auf den Anhänger ausgeübten Zugkräfte liegen. Das lässt sich darauf zurückführen, dass der Niederhalter im Wesentlichen um eine Vertikalachse verschwenkt wird.

Für den Fall, dass der Anhänger mit einer Deichsel ausgerüstet ist, decken sich die vorgenannte Zugebene und die von der Deichsel aufgespannte Ebene größtenteils. Jedenfalls wird der Niederhalter von seiner Offen- bzw. Ruhestellung in seine Arbeits- bzw. Schließstellung und zurück durch seitliches Verschwenken in im Wesentlichen eben dieser horizontalen Zugebene überführt. Im Gegensatz zu der AT 012093 findet also kein Verschwenken des Niederhalters senkrecht zur Zugebene statt. Vielmehr wird der erfindungsgemäße Niederhalter in der Zugebene - regelmäßig horizontal - verschwenkt.

Auf diese Weise kann mit äußerst geringem Spiel zwischen Verriegelungsvorrichtung und Kupplungselement bzw. Gegenkupplungselement gearbeitet werden, so dass ein unbeabsichtigtes Abkuppeln des Anhängers nicht zu befürchten ist.

Weitere vorteilhafte Ausgestaltungen werden im Folgenden beschrieben. So verfügt der Niederhalter in der Regel über einen Verriegelungsausleger und einen Drehzapfen, die größtenteils einstückig ausgeführt sind. Der Drehzapfen mag in einem Zapfenträger mit Anschlägen und dort in einer Zapfenaufnahme geführt sein. Die Anschläge sorgen dafür, dass der Verriegelungsausleger einwandfrei seine Offenstellung und Schließstellung einnimmt.

Die verschiedenen Stellungen des Niederhalters lassen sich mit Hilfe des Mitnehmers darstellen, welcher den Niederhalter sowohl in der Schließstellung als auch in der Offenstellung hält. Bei dem Mitnehmer handelt es sich regelmäßig um einen in die zugehörige Verriegelungsausnehmung im Drehzapfen bzw. am Niederhalter eingreifenden Bolzen. Dieser Bolzen wird von der Auslösevorrichtung getragen, bei welcher es sich um einen federunterstützten Auslösezapfen handeln mag.

Durch Lösen des Mitnehmers lässt sich der Niederhalter von seiner Schließstellung in seine Offenstellung und umgekehrt verschwenken. Dazu ist die bereits angesprochene Auslösevorrichtung bzw. der Auslösezapfen vorgesehen, welcher vorzugsweise in dem Zapfenträger angeordnet ist. Die Auslösevorrichtung bzw. der Auslösezapfen wird von der Feder beaufschlagt, deren Federkraft überwunden werden muss, um die Auslösevorrichtung zu betätigen.

Ferner verfügt die erfindungsgemäße Anhängerkupplung bzw. deren Niederhalter in der Regel über eine angeschlossene Feder, die größtenteils den Drehzapfen umgibt. Diese Feder wird beim Überführen des Niederhalters von der Schließstellung in die Offenstellung bzw. bei seinem seitlichen Verschwenken tordiert, so dass der Niederhalter beim Überführen von der Offen- in die Schließstellung durch Federkraft bewegt wird.

Folglich findet der Übergang von der Offen- in die Schließstellung gleichsam automatisch statt, während der Wechsel von der Schließstellung in die Offenstellung zumeist durch manuelle Beaufschlagung erreicht wird. Selbstverständlich ist es an dieser Stelle ebenso möglich, für eine automatische Stellbewegung zu sorgen, wenn dies erforderlich sein sollte. Folglich werden Offen- und/oder Schließstellung (durch Federkraft) automatisch eingenommen, wenn die Auslösevorrichtung bzw. der Auslösezapfen betätigt wird.

Gewindestifte, die vorzugsweise in dem Zapfenträger vorgesehen sind, sorgen für eine einwandfreie Führung des Niederhalters, insbesondere in seitlicher und vertikaler Richtung. Diese Gewindestifte stellen gleichzeitig sicher, dass der Niederhalter die beiden beschriebenen Positionen (Offen- und Schließstellung) einwandfrei einnimmt. Dafür sorgen ergänzend die Anschläge an der Zapfenaufnahme.

Im Ergebnis wird eine Anhängerkupplung für Zugfahrzeuge zur Verfügung gestellt, deren Niederhalter zur Verriegelung des Gegenkupplungselements gegenüber dem Kupplungselement sorgt, und zwar größtenteils spielfrei. Dabei wird insgesamt ein einfacher Aufbau erreicht, der sich beispielhaft für Zugvorrichtungen von Traktoren sowie selbstfahrende Arbeits- und Baumaschinen besonders eignet.

Dabei gelingt ein universeller Einsatz, weil sowohl Kupplungselemente wie Kupplungsbolzen oder Kupplungskugeln als auch Gegenkupplungselemente wie Zugöse oder Kupplungspfanne mit Hilfe des Niederhalters einwandfrei gegeneinander verriegelt werden können. Der Niederhalter ist als insgesamt geschlossenes System konzipiert, wobei Dichtungen kopfseitig der Auslösevorrichtung bzw. des Auslösezapfens und auch im Bereich des Drehzapfens sicherstellen, dass Feuchtigkeit und Schmutz nicht eindringen können. Dadurch stellt sich eine besonders robuste Ausführung dar.

Immer lässt sich der Niederhalter in der Zugebene bzw. größtenteils horizontal seitlich verschwenken und sorgt so für minimales Spiel bei der Verriegelung des Gegenkupplungselementes gegenüber dem Kupplungselement. Im Falle einer Kugelkopfkupplung bedeutet dies beispielsweise, dass sich ein sehr geringes Bewegungsspiel zwischen der Kupplungspfanne bzw. Zugkalotte und der Kupplungskugel durch das genaue Zustellen des Niederhalters realisieren lässt. Weiter hat sich als vorteilhaft erwiesen, dass im Verschleißfall lediglich der im Wesentlichen aus Verriegelungsausleger und Drehzapfen bestehende Niederhalter ersetzt zu werden braucht. Das ist kostengünstig. Zudem eröffnet der seitlich verschwenkbare Niederhalter mehr Freiräume nach oben, weil an dieser Stelle der im Stand der Technik üblicherweise vorgesehene Kipphaken entfällt. Dadurch gelingt das Anhängen und Abhängen des Anhängers einfacher und komfortabler. Außerdem entfällt das aufwändige Entfernen von Bolzen oder anderen Sicherungseinrichtungen für die im Stand der Technik eingesetzten Kipphaken.

Der Niederhalter wird in dem Zapfenträger unverlierbar gehalten, sodass zusätzliche Sicherungsmaßnahmen wie Ketten oder andere Befestigungselemente gegen Verlieren überflüssig werden. Schließlich lässt sich der beschriebene Niederhalter in bestehende Anhängesysteme mit Kupplungsbolzen und Zugöse bzw. Kupplungskugel und Kupplungspfanne integrieren, ohne dass größere Anpassarbeiten erforderlich wären. Hierin sind die wesentlichen Vorteile zu sehen.

Im Folgenden wird die Erfindung anhand einer lediglich ein Ausführungsbeispiel darstellenden Zeichnung näher erläutert. Es zeigen:
- Fig. 1: die erfindungsgemäße Anhängerkupplung in perspektivischer Ansicht in Schließstellung (durchgezogen) und Offenstellung (gestrichelt),
- Fig. 2: den Gegenstand nach Fig. 1 im Schnitt,
- Fig. 3: die Einzelteile der erfindungsgemäßen Anhängerkupplung in Explosionsdarstellung und
- Fig. 4: einen Schnitt durch den Zapfenträger.

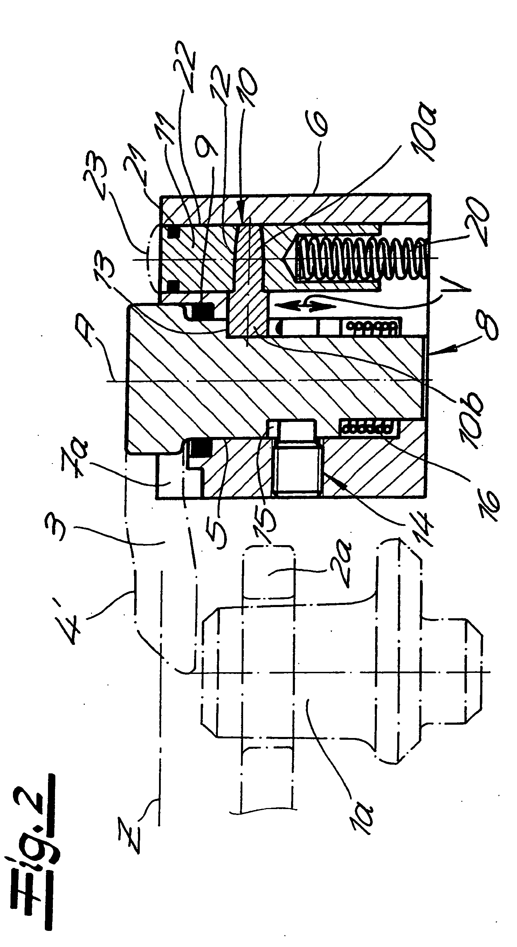

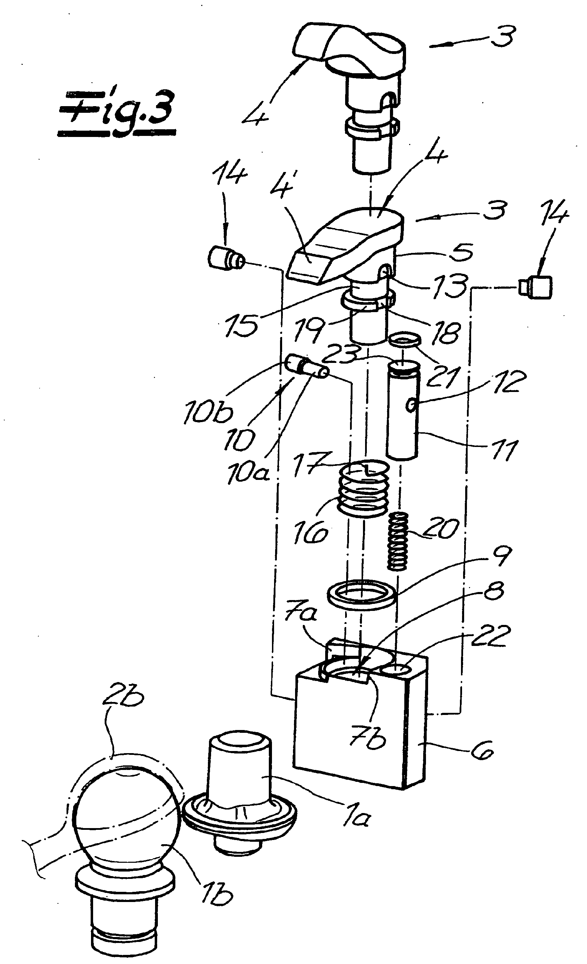

In den Figuren ist eine Anhängerkupplung für Zugfahrzeuge dargestellt, die über ein an einem nicht gezeigten Zugfahrzeug befestigtes Kupplungselement 1 sowie ein Gegenkupplungselement 2 an einem Anhänger verfügt. Bei dem Kupplungselement 1 handelt es sich im Rahmen der Darstellung nach Fig. 3 um einen Kupplungsbolzen 1a oder eine Kupplungskugel 1b. Hierzu gehört ein Gegenkupplungselement 2 in Gestalt einer in Fig. 2 angedeuteten Zugöse 2a oder einer Zugpfanne 2b, wie sie in Fig. 3 angedeutet ist. Selbstverständlich kann das Kupplungselement 1 auch am Anhänger vorgesehen sein, während das Zugfahrzeug das Gegenkupplungselement 2 trägt.

Das Gegenkupplungselement 2 wird gegenüber dem Kupplungselement 1 verriegelt, und zwar mittels eines Niederhalters 3. Dieser Niederhalter 3 sorgt also dafür, dass der mit dem Gegenkupplungselement 2 verbundene Anhänger einwandfrei an das das Kupplungselement 1 tragende Zugfahrzeug angehängt wird und in dieser Position auch verbleibt.

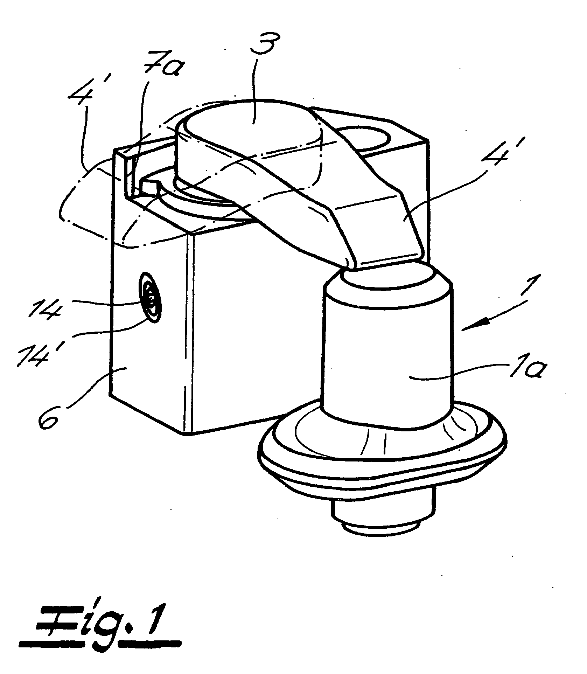

Zu diesem Zweck lässt sich der Niederhalter 3 erfindungsgemäß von seiner in Fig. 1 durchgezogen dargestellten Schließstellung in seine gestrichelt gezeichnete Offenstellung überführen und zurück, und zwar durch seitliches Verschwenken. Dieses seitliche Verschwenken findet im Wesentlichen in einer Zugebene Z statt, die durch die vom Zugfahrzeug auf den Anhänger ausgeübten Zugkräfte aufgespannt wird. In der Regel stimmt die Zugebene Z mit der Horizontalen überein. Folglich findet das Verschwenken des Niederhalters 3 im Wesentlichen horizontal bzw. in der horizontal angeordneten Zugebene Z statt. Dazu wird der Niederhalter 3 um eine Vertikalachse A verschwenkt.

Anhand der Explosionsdarstellung nach Fig. 3 erkennt man, dass der Niederhalter 3 einen Verriegelungsausleger 4 und einen Drehzapfen 5 aufweist. Der in der Fig. 3 oberste Niederhalter 3 verfügt über einen Verriegelungsausleger 4, welcher der Form der auf die Kupplungskugel 1b aufgesetzten Kupplungspfanne 2b Rechnung trägt. Genauso ist der darunter dargestellte Niederhalter 3 an die speziellen Bedürfnisse bei einem Kupplungsbolzen 1a angepasst, der mit einer Zugöse 2a zusammenwirkt (vgl. Fig. 2). Zu diesem Zweck weist der Verriegelungsausleger 4 einen das Gegenkupplungselement 2 wenigstens teilweise übergreifenden Steg 4' auf, welcher zudem der Form des Gegenkupplungselementes 2 Rechnung trägt, falls dies erforderlich sein sollte.

Der Drehzapfen 5 des Niederhalters 3 wird in einem Zapfenträger 6 mit Anschlägen 7a, 7b geführt. Der in der Zeichnung linke Anschlag 7a definiert die Offenstellung des Niederhalters 3 (gestrichelt in Fig. 1), während der rechte Anschlag 7b zur Schließstellung (durchgezogen in Fig. 1) korrespondiert. Zur drehbaren Lagerung des Drehzapfens 5 um die Achse A ist eine Zapfenaufnahme 8 im Zapfenträger 6 vorgesehen, wobei zusätzlich eine oberseitige Dichtung 9 dafür sorgt, dass der Drehzapfen 5 in der Zapfenaufnahme 8 vor äußeren Umwelteinflüssen geschützt wird. Diese Dichtung 9 befindet sich im eingebauten Zustand des Niederhaltes 3 in dem Zapfenträger 6 unterhalb des Verriegelungsauslegers 4.

In Fig. 3 ist darüber hinaus ein Mitnehmer 10 zu erkennen, welcher den Niederhalter 3 in seiner Offen- und Schließstellung hält. Der Mitnehmer 10 wird in einer Auslösevorrichtung 11, vorliegend einem Auslösezapfen 11, getragen. Dazu verfügt der Auslösezapfen 11 über eine Querbohrung 12, die den als Bolzen ausgeführten Mitnehmer 10 teilweise aufnimmt, wie Fig. 2 zeigt.

Tatsächlich ist der Mitnehmer 10 lediglich mit einem Einsteckbereich 10a in die Querbohrung 12 eingesetzt, wohingegen ein Führungsbereich 10b des Mitnehmers 10 gegenüber dem Auslösezapfen 11 vorkragt.

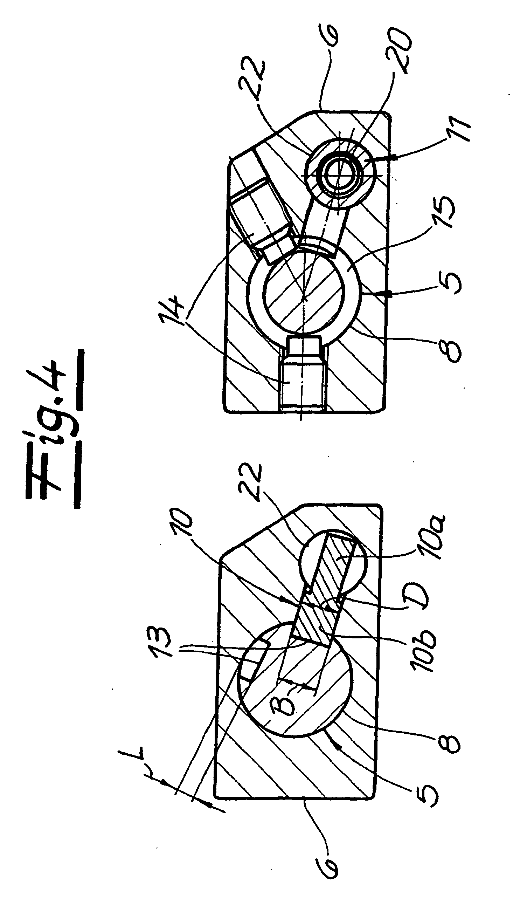

Dieser Führungsbereich 10b bzw. der Mitnehmer 10 im Ganzen taucht sowohl in Offenstellung als auch in Schließstellung des Niederhalters 3 in eine Verriegelungsausnehmung 13 ein. Im Rahmen des Ausführungsbeispiels sind zwei Verriegelungsausnehmungen 13 am Drehzapfen 5 vorgesehen (vgl. Fig. 4).

Die jeweilige Verriegelungsausnehmung 13 verfügt dabei über eine Breite B, die im Wesentlichen an den Durchmesser D des Führungsbereiches 10b des Mitnehmers 10 angepasst ist. Die Länge L der Verriegelungsausnehmung 13 ist so bemessen, dass der Führungsbereich 10b des Mitnehmers 10 wenigstens teilweise in die Verriegelungsausnehmung 13 eingreift, und zwar sowohl in der Offenstellung als auch der Schließstellung des Niederhalters 3.

Zusätzlich sind Stifte 14 vorgesehen, welche in dem Zapfenträger 6 aufgenommen sind und für die Führung des Niederhalters 3 bzw. des Drehzapfens 5 sorgen (vgl. Fig. 2 bis 4). Bei diesen Stiften 14 handelt es sich im Rahmen des Ausführungsbeispiels um Gewindestifte 14, also solche Stifte 14, die mit Hilfe eines Gewindes in eine zugehörige Bohrung 14' im Zapfenträger 6 eingesetzt werden. Anhand der Fig. 1 erkennt man eine solche Bohrung 14' bzw. den Gewindestift 14 in Gestalt einer von außen sichtbaren Innensechskantausnehmung.

Die Gewindestifte 14 greifen in eine umlaufende Nut 15 des Drehzapfens 5 ein und sorgen auf diese Weise nicht nur für den Halt des Drehzapfens 5 bei seinen Schwenkbewegungen in der Zugebene Z, sondern darüber hinaus auch dafür, dass eine um den Drehzapfen 5 herum angeordnete Feder 16 den Drehzapfen 5 nicht aus der Drehzapfenaufnahme 8 herausdrückt. Diese Feder 16 greift mit ihrem einen Ende 17 in eine Aussparung 18 eines die umlaufende Ringnut 15 begrenzenden Steges 19 ein. Dadurch wird die Feder 16 beim Übergang von der Schließstellung des Niederhalters 3 in seine Offenstellung tordiert.

Infolge dieser Torsion kann sich der Niederhalter 3 per Federkraft von der Offenstellung in die Schließstellung bewegen, wenn der Niederhalter 3 von dem Mitnehmer 10 freigegeben wird. Eine weitere Feder 20 beaufschlagt die Auslösevorrichtung bzw. den Auslösezapfen 11 dagegen größtenteils vertikal, sodass eine (manuelle) Beaufschlagung der Auslösevorrichtung bzw. des Auslösezapfens 11 immer gegen die Kraft der Feder 20 erfolgt. Die Auslösevorrichtung 11 wird zusammen mit der fußseitig angeordneten Feder 20 und einer oberseitigen Dichtung 21 in einer Bohrung 22 im Zapfenträger 6 aufgenommen. Die Bohrung 22 wird mit Hilfe der Dichtung 21 abgedichtet, sodass der Niederhalter 3 inklusive Zapfenträger 6 eine insgesamt geschlossene Einheit darstellt.

Zum Auswechseln des Niederhalters 3 ist es lediglich erforderlich, die Gewindestifte 14 aus dem Zapfenträger 6 zu entfernen, sodass der Drehzapfen 5 und mit ihm der Verriegelungsausleger 4 freikommen. Dadurch lassen sich ganz unterschiedliche Niederhalter 3 mit einem einzigen Zapfenträger 6 kombinieren und gestaltet sich im Übrigen ein Verschleißaustausch besonders günstig und einfach.

Zum Öffnen des Niederhalters 3, beginnend in der Schließstellung (durchgezogene Darstellung in Fig. 1), wird der Mitnehmer 10 in der Fig. 2 nach unten gedrückt, und zwar indem der Auslösezapfen 11 mit einem darauf oberseitig angeordneten Auslöseknopf 23 eine Beaufschlagung erfährt. Gleichzeitig wird die Feder 20 komprimiert. Infolge dieser Vertikalbewegung des Mitnehmers 10 in Richtung V (vgl. Fig. 2) entfernt sich der Mitnehmer 10 von der Verriegelungsausnehmung 13 und gelangt in die ringförmige Nut 15. Auf diese Weise kann der Niederhalter 3 nun durch eine Handbewegung zur Seite in der Zugebene Z in die Offenstellung überführt werden. Dort rastet der Niederhalter 3 ein, weil in der Offenstellung eine zweite Verriegelungsausnehmung 13 für den Mitnehmer 10 zur Verfügung steht. Tatsächlich sorgt die Feder 20 dafür, dass der Auslösezapfen 11 und mit ihm der Mitnehmer 10 vertikal nach oben in diese zweite Verriegelungsausnehmung 13 gedrückt werden.

Das Schließen des Niederhalters 3 aus dieser Offenstellung (vgl. die gestrichelte Darstellung in Fig. 1) heraus wird durchgeführt, indem wiederum der Auslöseknopf 23 manuell betätigt wird, und zwar so lange, bis der Mitnehmer 10 freikommt. Die zuvor beim Übergang von der Schließstellung in die Offenstellung tordierte Feder 16 sorgt nun dafür, dass der Niederhalter 3 selbsttätig in die Schließstellung bewegt wird. Diese Dreh- bzw. Schwenkbewegung des Niederhalters 3 wird von dem Anschlag 7b am Zapfenträger 6 begrenzt. Gleiches gilt für die Offenstellung, die mit Hilfe des Anschlages 7a definiert wird.

In der Schließstellung rastet der Mitnehmer 10 in die zugehörige Verriegelungsausnehmung 13 ein und wird folglich in der betreffenden Position gehalten. - Es versteht sich, dass die Zugebene Z nicht zwingend horizontal verlaufen muss, genauso wenig wie die Vertikalachse A ausschließlich vertikal angeordnet ist. Vielmehr sind auch Schrägstellungen möglich und werden umfasst, solange nur ein mehr oder minder seitliches Verschwenken des Niederhalters 3 in der Zugebene Z (oder in geringem spitzen Winkel hierzu) erfolgt.

## Patentansprüche

1. Anhängerkupplung für Zugfahrzeuge, mit einem am Zugfahrzeug befindlichen Kupplungselement (1), und mit einem am Anhänger angeordneten Gegenkupplungselement (2), wobei
- das Gegenkupplungselement (2) mittels eines Niederhalters (3) gegenüber dem Kupplungselement (1) verriegelt wird, wobei ferner
- der Niederhalter (3) von seiner Offenstellung in seine Schließstellung und umgekehrt durch seitliches Verschwenken überführt wird, und wobei
- der Niederhalter (3) mittels eines Mitnehmers (10) in Offen- und Schließstellung gehalten wird sowie durch Lösen des Mitnehmers (10) mit Hilfe einer Auslösevorrichtung (11) verschwenkbar ist,
**dadurch gekennzeichnet, dass**
- die Auslösevorrichtung (11) von einer Feder (20) beaufschlagt wird, deren Federkraft zu ihrer Betätigung überwunden werden muss, und dass
- der in der Auslösevorrichtung (11) getragene Mitnehmer (10) in Offen- und Schließstellung des Niederhalters (3) in eine Verriegelungsausnehmung (13) am Niederhalter (3) eingreift.

2. Anhängerkupplung nach Anspruch 1, **dadurch gekennzeichnet, dass** die Schwenkbewegungen des Niederhalters (3) um eine Vertikalachse (A) im Wesentlichen in einer vorzugsweise horizontalen Zugebene (Z) erfolgen.

3. Anhängerkupplung nach Anspruch 1 oder 2, **dadurch gekennzeichnet, dass** der Niederhalter (3) einen Verriegelungsausleger (4) und einen Drehzapfen (5) aufweist, wobei der Drehzapfen (5) in einem Zapfenträger (6) mit Anschlägen (7a, 7b) aufgenommen wird.

4. Anhängerkupplung nach Anspruch 3, **dadurch gekennzeichnet, dass** der Drehzapfen (5) in eine Zapfenaufnahme (8) im Zapfenträger (6) eingesetzt ist.

5. Anhängerkupplung nach einem der Ansprüche 1 bis 4, **dadurch gekennzeichnet, dass** es sich bei dem Kupplungselement um einen Kupplungsbolzen (1a) oder eine Kupplungskugel (1 b) handelt.

6. Anhängerkupplung nach einem der Ansprüche 1 bis 5, **dadurch gekennzeichnet, dass** das Gegenkupplungselement als Zugöse (2a) oder Kupplungspfanne (2b) ausgeführt ist.

7. Anhängerkupplung nach einem der Ansprüche 1 bis 6, **dadurch gekennzeichnet, dass** der Niederhalter (3) eine angeschlossene Feder (16) aufweist, welche bei seitlichem Verschwenken des Niederhalters (3) tordiert wird.

8. Anhängerkupplung nach einem der Ansprüche 1 bis 7, **dadurch gekennzeichnet, dass** der Niederhalter (3) mittels Gewindestiften (14) in seitlicher und vertikaler Richtung im Zapfenträger (6) gehalten wird.

## Claims

1. Trailer coupling for towing vehicles, comprising a coupling element (1) on the towing vehicle and a mating coupling element (2) on the trailer, wherein
- the mating coupling element (2) is locked to the coupling element (1) by means of a holding-down device (3), wherein furthermore
- the holding-down device (3) is moved from its open position to its closed position, and vice versa, by lateral pivoting, and wherein
- the holding-down device (3) is held in the open and closed position by means of a catch (10) and can be pivoted by releasing the catch (10) by means of a release device (11),
**characterised in that**
- the release device (11) is acted upon by a spring (20), the spring force of which has to be overcome in order to actuate said release device, and **in that**
- the catch (10) borne in the release device (11) engages in a locking recess (13) on the holding-down device (3) in the open and closed position of the holding-down device (3).

2. Trailer coupling according to Claim 1, **characterised in that** the pivoting movements of the holding-down device (3) are carried out about a vertical axis (A) essentially in a preferably horizontal traction plane (Z).

3. Trailer coupling according to Claim 1 or 2, **characterised in that** the holding-down device (3) comprises a locking arm (4) and a pivot pin (5), wherein the pivot pin (5) is held in a pin carrier (6) with stops (7a, 7b).

4. Trailer coupling according to Claim 3, **characterised in that** the pivot pin (5) is inserted in a pin holder (8) in the pin carrier (6).

5. Trailer coupling according to one of Claims 1 to 4, **characterised in that** the coupling element is a hitch pin (1a) or hitch ball (1b).

6. Trailer coupling according to one of Claims 1 to 5, **characterised in that** the mating coupling element is designed as a towing eye (2a) or hitch cup (2b).

7. Trailer coupling according to one of Claims 1 to 6, **characterised in that** the holding-down device (3) comprises an associated spring (16) which is torqued during the lateral pivoting of the holding-down device (3).

8. Trailer coupling according to one of Claims 1 to 7, **characterised in that** the holding-down device (3) is held in the pin carrier (6) in the lateral and vertical direction by means of threaded pins (14).

## Revendications

1. Attelage pour véhicules tracteurs, comportant un élément d'attelage (1) situé sur le véhicule tracteur et comportant un contre-élément d'attelage (2) disposé sur une remorque, dans lequel
- le contre-élément d'attelage (2) étant verrouillé, par rapport à l'élément d'attelage (1), au moyen d'un élément de maintien vers le bas (3),
- l'élément de maintien vers le bas (3) étant transposé de sa position ouverte dans sa position fermée et inversement, par pivotement latéral, et
- l'élément de maintien vers le bas (3) étant maintenu en position ouverte et en position fermée au moyen d'un tenon d'entraînement (10) et pouvant être pivoté par desserrage du tenon d'entraînement (10) à l'aide d'un dispositif déclencheur (11),
**caractérisé en ce que**
- le dispositif déclencheur (11) est contraint par un ressort (20), dont la tension doit être surmontée, aux fins de son actionnement, et **en ce que**
- dans la position ouverte et la position fermée de l'élément de maintien vers le bas (3), le tenon d'entraînement (10) porté dans le dispositif déclencheur (11) vient en prise dans un évidement de verrouillage (13) sur l'élément de maintien vers le bas (3).

2. Attelage selon la revendication 1, **caractérisé en ce que** les mouvements de pivotement de l'élément de maintien vers le bas (3) s'effectuent autour d'un axe vertical (A) essentiellement dans un plan de traction (Z) de préférence horizontal.

3. Attelage selon la revendication 1 ou 2, **caractérisé en ce que** l'élément de maintien vers le bas (3) comporte un bras de verrouillage (4) et un tourillon (5), le tourillon (5) étant logé dans un porte-tourillon (6) présentant des butées (7a, 7b).

4. Attelage selon la revendication 3, **caractérisé en ce que** le tourillon (5) est inséré dans un logement de tourillon (8) dans le porte-tourillon (6).

5. Attelage selon l'une des revendications 1 à 4, **caractérisé en ce que** l'élément d'attelage est un goujon d'attelage (1a) ou une rotule d'attelage (1b).

6. Attelage selon l'une des revendications 1 à 5, **caractérisé en ce que** le contre-élément d'attelage est un anneau de couplage de remorque (2a) ou une cavité de couplage de remorque (2b) .

7. Attelage selon l'une des revendications 1 à 6, **caractérisé en ce que** l'élément de maintien vers le bas (3) comporte un ressort (16) raccordé, subissant une torsion lors du pivotement latéral de l'élément de maintien vers le bas (3).

8. Attelage selon l'une des revendications 1 à 7, **caractérisé en ce que** l'élément de maintien vers le bas (3) est maintenu dans le porte-tourillon (6) au moyen de tiges filetées (14) dans la direction latérale et verticale.
